# EUROPÄISCHE PATENTSCHRIFT

(11) **EP 4 362 758 B1**
(45) Veröffentlichungstag und Bekanntmachung des Hinweises auf die Patenterteilung: **05.03.2025**
(21) Anmeldenummer: 22757486.0
(22) Anmeldetag: 01.07.2022
(51) Int. Cl.: A47L 9/10, A47L 9/24

(54) **STAUBSAUGERAUFSATZ FÜR EIN SAUGROHR EINES STAUBSAUGERS ZUM ZERSTÖRUNGSFREIEN AUSSIEBEN VON GEGENSTÄNDEN UND/ODER VON LEBEWESEN MIT EINEM AUFPRALLSCHUTZMATERIAL**
VACUUM CLEANER ATTACHMENT FOR A SUCTION TUBE OF A VACUUM CLEANER FOR THE NON-DESTRUCTIVE SCREENING OF OBJECTS AND/OR OF LIVING BEINGS WITH AN IMPACT PROTECTION MATERIAL
EMBOUT D'ASPIRATEUR POUR UN TUBE D'ASPIRATION D'UN ASPIRATEUR POUR LE TAMISAGE NON DESTRUCTIF D'OBJETS ET/OU D'ÊTRES VIVANTS AVEC UN MATÉRIAU ANTICHOC

(30) Priorität: 02.07.2021 DE 202021103572 U
(43) Veröffentlichungstag der Anmeldung: 08.05.2024
(73) Patentinhaber: Headis GmbH, 66919 Weselberg (DE)
(72) Erfinder: WEGNER, René, 66919 Weselberg (DE)
(74) Vertreter: Weidner Stern Jeschke
(86) Internationale Anmeldenummer: PCT/DE2022/200147
(87) Internationale Veröffentlichungsnummer: WO 2023/274470

(56) Entgegenhaltungen:
- WO-A1-2004/081541
- DE-T2- 69 303 706
- US-A- 5 768 748

## Beschreibung

Die Erfindung betrifft einen Staubsaugeraufsatz für ein Saugrohr eines Staubsaugers zum zerstörungsfreien Aussieben von Gegenständen und/oder von Lebewesen, wobei der Staubsaugeraufsatz ein Ansaugrohr mit einer Ansaugöffnung an einem ersten Ende aufweist und in dem Ansaugrohr in einer Ansaugrichtung nachfolgend der Ansaugöffnung eine Auffangeinheit zum Aussieben angeordnet ist, wobei die Auffangeinheit einen Durchbruch oder mehrere Durchbrüche zum Durchströmen eines Ansaugluftstroms aufweist und der Staubsaugeraufsatz an einem zweiten, dem ersten Ende gegenüberliegenden Ende eine Adaptereinheit zum Verbinden mit dem Saugrohr des Staubsaugers aufweist.

Bei üblichen Beutelstaubsaugern und Zyklonstaubsaugern werden eingesaugte Kleinstteile und Insekten erst im Vorfilter, Staubsaugerbeutel und/oder Zyklonfilter zurückgehalten. Nachteilig ist, dass Insekten und Spinnen aus dem Staubsauger und/oder dem Staubsaugerbeutel oder Zyklonfilter wieder herauskrabbeln oder darin verenden können. Zudem werden die Insekten und Spinnen häufig durch den Aufprall auf innere Bestandteile des Staubsaugers verletzt oder abgetötet. Durch die dabei austretenden Körpersäfte der Insekten und Spinnen tritt eine zusätzliche mikrobielle Belastung aufgrund von Abbauvorgängen, beispielsweise im Vorfilter, Staubsaugerbeutel oder Zyklonfilter, auf.

Um zu entfernende Insekten nicht zu töten, sondern gezielt zu fangen und wieder in die Natur freizulassen, sind verschiedene Vorrichtungen für Staubsauger bekannt. In der DE 10 2013 018 532 A1 wird ein Staubsaugeraufsatz zum Einfangen von lebenden Insekten mit einem Saugstutzen beschrieben, wobei der Saugstutzen als Auffangbehälter dient und quer zur Ansaugrichtung über den gesamten Querschnitt des Saugstutzens ein Sieb zum Zurückhalten der Insekten und/oder der Kleinteile aufweist. In Ansaugrichtung nach dem Sieb ist der Saugstutzen mit einem Ansaugrohr verbunden, welches wiederum mittels Adapter oder Dichtringen mit einem Staubsaugerrohr eines handelsüblichen Rüsselstaubsaugers verbindbar ist. Nachteilig hierbei ist, dass Insekten im Saugluftstrom direkt auf das Sieb aufprallen, sich mit ihren Beinen in den Siebmaschen verheddern oder sogar getötet werden können.

Aus der DE 9110052 U1 ist ein circa 1 m langes, durchsichtiges Zusatzrohr zu Hand- und Bodenstaubsaugern zum Absaugen und Einfangen von Insekten bekannt, welches sich am Ende trichterförmig öffnet und auf das Teleskoprohr eines Staubsaugers gesteckt werden kann, wobei an einer Steckseite des Zusatzrohrs ein Zwischenstück gesteckt werden kann, welches ein gitterförmiges Sieb zum Zurückhalten der Insekten enthält. Das Sieb ist ebenfalls quer zum Luftstrom im Zwischenstück angeordnet.

In der EP 1 040 756 A1 wird ein Insekteneinfangaufsatz für einen Staubsauger beschrieben, welcher einen Auffangbehälter mit einem ebenfalls quer zur Luftströmung angeordneten Filtermedium ausgebildet als Sieb aufweist, wobei ein bewegliches Ventil vorgeschaltet ist, welches geöffnet wird, wenn ein Vakuumsaugdruck im Auffangbehälter anliegt.

DE 18 09 771 U beschreibt ein trichterförmiges Gerät zum Einfangen von Fluginsekten, welches auf ein Gebläse eines Staubsaugers aufsetzbar ist. Innerhalb des trichterförmigen Gerätes ist ein Siebkasten befestigt, welcher nach Einfangen der Insekten mit einem zweiten Sieb ausgebildet als Klappdeckel innerhalb des trichterförmigen Gerätes verschlossen werden kann.

Zudem sind Insekteneinfangvorrichtungen als separat ausgebildete Geräte bekannt. Beispielsweise wird in der US 6226919 B1 eine Insekten-Vakuumfalle mit einem länglichen Gehäuse und einem Vakuum erzeugenden Zentrifugal-Laufrad beschrieben, wobei innerhalb des Gehäuses ein Netzkorb zum Auffangen von Insekten angeordnet ist und in dem Netzkorb Pellets aufweisend Paradichlorbenzol zum Desorientieren der angesaugten Insekten angeordnet sind.

DE 10 2005 030 502 A1 offenbart ein eigenständiges Insektenfanggerät mit einer trichterförmigen Eintrittsöffnung, einem nachfolgenden Fangrohr und einer Fangeinrichtung, wobei koaxial im Fangrohr eine Treibdüse zum Eindüsen eines gasförmigen Treibmediums in das Fangrohr angeordnet ist. Die Fangeinrichtung ist aus einem weichem oder harten Material und gasdurchlässig.

Aus der DE 20 2004 006 039 U1 ist ein Insektensauger zum Fangen von Insekten aus zwei miteinander verbindbaren Teilen offenbart, bei welchem der erste Teil einen Saugmotor und einen herausnehmbaren, waschbaren Schaumstofffilter aufweist, wobei der Schaumstofffilter direkt vor dem Saugmotor angeordnet ist, und der zweite Teil einen transparenten Fangbehälter mit einer Ansaugöffnung aufweist.

In der US 4 074 458 A wird ein tragbares motorisiertes Handsauggerät zum Fangen von fliegenden Insekten beschrieben, in dessen Gehäuse eine zum Düseninneren hin offene Innenkammer zur Aufnahme eines entfernbaren Maschenkäfigs angeordnet ist.

WO 96/26641 A1 offenbart eine Saugapparatur und einen Handstaubsauger zum unverletzten Einfangen von Insekten, wobei ein Saugmund ausgebildet als Rohr einen Haarfilter aufweist. Die Haare des Haarfilters reichen radial und longitudinal in den Saugmund rein, halten dadurch Insekten fest und verhindern einen Wiederaustritt der Insekten aus dem Saugmund.

WO 2004/081541 A1 offenbart eine Assay-Vorrichtung für den Nachweis von Allergenen im Kot von Hausstaubmilben mit einer zylindrischen Sammeleinheit, an welcher direkt eine Testeinheit verbunden ist. Die zylindrische Sammeleinheit ist mittels einer Trennwand mit einen zentralen Luftdurchgangsloch in eine untere Befestigungseinheit zum Befestigen an einem Staubsaugerschlauch und in eine obere Probenkammer getrennt. Vor dem zentralen Luftdurchgangsloch ist in der oberen Probenkammer ein Zellulosefilter mit einer Porengröße von 10 bis 50 µm angeordnet. Vom Zellulosefilter zurückgehaltene feste Partikel und Hausstaubmilben werden direkt in der Probekammer mittels einer Extraktionsflüssigkeit extrahiert und über eine Probenausgangsöffnung in die Testeinheit überführt.

Die DE 693 08 706 T2 betrifft ebenfalls eine Vorrichtung zum Sammeln für einen Antigen-Nachweis bei Hausstaubmilben, wobei die Sammelvorrichtung entweder ein röhrenförmiges Aufnahmegefäß mit einem Körper aus Nylon-Siebmaterial mit einer Porengröße in einem Bereich von 15 bis 60 µm oder eine entfernbare Scheibe mit einem Porendurchmesser in einem Bereich von 5 bis 300 µm aufweist, welche nach dem Rückhalt für den Nachweis extrahiert werden.

US 5 768 748 A beschreibt einen Absaugaufsatz zum Absaugen von Flöhen aus Haaren von Haustieren, welcher eine Falle mit einem transparenten zylindrischen Fallenkörper, einem zylindrischen Auslassverbinder und einem zylindrischen Einlassverbinder aufweist, wobei an dem zylindrischen Einlassverbinder ein Vakuumkopf verbindbar ist. Der Einlassverbinders weist ein zentral angeordnetes kugelförmiges Barriereelement auf, welches einen ringförmigen Luftstromeinlass zwischen dem kugelförmigen Barriereelement und seiner Innenwand begrenzt und eine Wiederaustritt von abgesaugten Flöhen verhindert. Anschließend ist im Auslassverbinder ein kreisförmiges Filtersieb zum Zurückhalt der Flöhe und anderer Partikel angeordnet.

Nachteilig bei allen bekannten Vorrichtungen, bei denen die Insekten oder Spinnen direkt auf den Siebkorb oder das Siebnetz aufprallen, ist, dass neben einer möglichen Verletzung durch den Aufprall selbst stets die Gefahr besteht, dass die Beine der Insekten oder Spinnen durch die Sieböffnungen aufgrund des Ansaugvakuums des Staubsaugers gezogen werden. Dabei brechen die Beine leicht ab und/oder die Insekten/Spinnen werden am Körper durch Quetschungen an der Kante der Sieböffnung verletzt. Dadurch, dass der Insektenkörper auf der einen Seite der Siebfläche verbleibt, während die Beine auf die andere Seite der Siebfläche durchgezogen werden, wird auch das anschließende gezielte Freisetzen des Insektes oder der Spinne ohne Verletzung erschwert.

Aufgabe der Erfindung ist es, den Stand der Technik zu verbessern.

Gelöst wird die Aufgabe durch einen Staubsaugeraufsatz für ein Saugrohr eines Staubsaugers zum zerstörungsfreien Aussieben von Gegenständen und/oder von Lebewesen, wobei der Staubsaugeraufsatz ein Ansaugrohr mit einer Ansaugöffnung an einem ersten Ende aufweist und in dem Ansaugrohr in einer Ansaugrichtung nachfolgend der Ansaugöffnung eine Auffangeinheit zum Aussieben angeordnet ist, wobei die Auffangeinheit einen Durchbruch oder mehrere Durchbrüche zum Durchströmen eines Ansaugluftstroms aufweist und der Staubsaugeraufsatz an einem zweiten, dem ersten Ende gegenüberliegenden Ende eine Adaptereinheit zum Verbinden mit dem Saugrohr des Staubsaugers aufweist, wobei die Auffangeinheit ein luftdurchlässiges Aufprallschutzmaterial in der Ansaugrichtung vor dem Durchbruch oder den Durchbrüchen aufweist, wobei das luftdurchlässige Aufprallschutzmaterial ein dämpfendes, kompressibles und/oder elastisches Material ist.

Somit wird ein Staubsaugeraufsatz mit Siebfunktion bereitgestellt, mit dem ein nachhaltiges und nicht tödliches Auffangen von Insekten oder Spinnen, und ein zerstörungsfreies Auffangen von Gegenständen, beispielsweise Spielsteinen, erfolgt.

Es ist besonders vorteilhaft, dass das luftdurchlässige Aufprallschutzmaterial in Ansaugrichtung vor dem Durchbruch oder den Durchbrüchen angeordnet ist. Dadurch ist der Durchbruch oder sind die Durchbrüche zum Durchlassen der Ansaugluft mit dem luftdurchlässigen Aufprallschutzmaterial bedeckt und ein in den Staubsaugeraufsatz eingesaugtes Lebewesen kann dadurch nicht in einen direkten Kontakt mit der Siebfläche und einem Durchbruch kommen. Folglich können auch die Beine des Lebewesens nicht durch den Durchbruch oder die Durchbrüche aufgrund des Unterdrucks eines verbundenen Staubsaugers gezogen werden. Ebenso können feinkonturierte Kleinteile mit einem kleinen Bestandteil nicht in einen Durchbruch eingesaugt werden und darin feststecken bleiben.

Neben der räumlichen Abdeckung der Durchbrüche in Ansaugrichtung wirkt das luftdurchlässige Aufprallschutzmaterial zudem dämpfend beim Aufprall des Lebewesens und/oder des Gegenstandes auf die Auffangeinheit, sodass das Risiko einer Verletzung oder Beschädigung weiter reduziert ist. Folglich wird durch diese Ausgestaltung der Auffangeinheit sichergestellt, dass das aufgefangene Lebewesen unversehrt aus dem Staubsaugeraufsatz wieder in die Natur freigelassen werden kann. Folglich wird mittels des Staubsaugeraufsatzes eine Verletzung der Insekten, Spinnen, und/oder eine Beschädigung von Kleinteilen beim Aufsaugen vermieden.

Durch die Anordnung der Auffangeinheit nachfolgend der Ansaugöffnung werden zudem die Insekten, die Spinnen und/oder Kleinteile direkt in den Auffangeinheit angesaugt und dort aufgefangen, ohne dass diese weiter in das Ansaugrohr und/oder Saugrohr des Staubsaugers hinein transportiert werden. Somit wird verhindert, dass Insekten und/oder Spinnen in den Vorfilter und/oder den Staubsaugerbeutel eines konventionellen Staubsaugers gelangen, wo diese entweder wieder herauskrabbeln können oder verenden. Zudem ist es bei Kleinteilen, beispielsweise einem Puzzleteil, schwierig, diese zwischen dem eingesaugten Dreck im üblichen Staubsaugerbeutel wiederzufinden, ohne sich beim Durchsuchen einer erhöhten Schmutz- und Staubbelastung auszusetzen.

Dadurch, dass die Lebewesen und/oder Kleinteile mittels der Auffangeinheit in kurzer räumlicher Nähe zur Ansaugöffnung des Staubsaugeraufsatzes ausgesiebt werden, sind diese aus dem Staubsaugeraufsatz auch direkt und schnell wieder freisetzbar und/oder auskippbar.

Ein wesentlicher Gedanke der Erfindung beruht darauf, durch eine flächige Auskleidung der Auffangeinheit mit dem luftdurchlässigen Aufprallschutzmaterial zumindest in dem Bereich, in dem die Lebewesen und/oder Kleinteile beim Ansaugen auf die Oberfläche der Auffangeinheit auftreffen, eine Dämpfung des Aufpralls der Lebewesen und/oder Kleinteile bereitzustellen und gleichzeitig durch die Abdeckung der Siebfläche mit den Durchbrüchen einen direkten Kontakt der Lebewesen und/oder Kleinteile zu unterbinden. Durch die dämpfende Wirkung des luftdurchlässigen Aufprallschutzmaterials wird die Aufprallgeschwindigkeit der Lebewesen und/oder Kleinteile verringert und somit ein Staubsaugeraufsatz mit einem sicheren Einfangen und Aufsaugen von Insekten ohne deren Verletzung und von Kleinteilen ohne deren Zerstörung bereitgestellt. Dadurch, dass das Aufprallschutzmaterial in Ansaugrichtung vor dem Durchbruch oder den Durchbrüchen luftdurchlässig ist, ist zudem der Druckverlust durch das Aufprallschutzmaterial selbst minimiert und ein verbundener Staubsauger wird in seinem Betrieb nicht beeinträchtigt. Dadurch ist der Staubsaugeraufsatz sowohl zum gezielten Aufsaugen von Lebewesen und/oder Kleinteilen als auch zum konventionellen Reinigen von Flächen geeignet.

Es ist besonders vorteilhaft, dass die Insekten, Spinnen und Kleinteile innerhalb des Ansaugrohres durch das vorgelagerte Aufprallschutzmaterial und eben gerade nicht durch die Durchbrüche zurückgehalten werden. Durch die Anordnung des luftdurchlässigen Aufprallschutzmaterials in Ansaugrichtung vor den Durchbrüchen übernimmt das Aufprallschutzmaterial für die auszusiebenden Insekten, Spinnen und/oder Kleinteile gleichzeitig die Funktion der Aufpralldämpfung und die Funktion eines Filterelementes und bewirkt deren Rückhalt. Dadurch müssen die in Strömungsrichtung nachfolgenden Durchbrüche mit ihrem maximalen Durchmesser und somit der Trenngröße nicht auf die Größe der Insekten, Spinnen und/oder Kleinteile abgestimmt sein.

Vorteilhaft können die Durchbrüche auch einen größeren Durchmesser als die aufzusaugenden Insekten, Spinnen und/oder Kleinteile aufweisen, da deren Rückhalt nicht durch die Abmessung der Durchbrüche, sondern gerade durch das vorgeschaltete luftdurchlässige Aufprallschutzmaterial erfolgt. Dadurch, dass für die Durchbrüche ein erheblich größerer Durchmesser als der maximale Durchmesser des Insektes, der Spinne oder des Kleinteiles gewählt werden kann, wird der Druckverlust durch die Auffangeinheit minimiert und der Druckverlust bewirkt durch das vorgeschaltete luftdurchlässige Aufprallschutzmaterial selbst kann durch eine entsprechend große Ausgestaltung der Durchbrüche kompensiert werden.

Folgendes Begriffliche sei erläutert:
Ein "Staubsaugeraufsatz" ist insbesondere ein Bauteil, welches mit einem Saugrohr eines konventionellen Staubsaugers über eine Adaptereinheit des Staubsaugeraufsatzes verbindbar ist. Ein Staubsaugeraufsatz wird beispielsweise anstelle eines Bürstenkopfes an dem Saugrohr eines Staubsaugers verbunden. Im Verbindungsfall gelangt die angesaugte Luft somit zunächst in den Staubsaugeraufsatz und anschließend in das verbundene Saugrohr des Staubsaugers. Der Staubsaugeraufsatz ist insbesondere rohrförmig mit einem Ansaugrohr ausgeführt, wobei das Ansaugrohr die Ansaugöffnung zum Ansaugen von Lebewesen, Gegenständen und/oder Staub und die nachfolgende Auffangeinheit zum Auffangen und somit Aussieben der Lebewesen und/oder Gegenstände aufweist. Prinzipiell kann der Staubsaugeraufsatz und seine Bestandteile inklusive der Auffangeinheit jegliches Material, wie beispielsweise Kunststoff, Metall und/oder einen Verbundwerkstoff aufweisen. Auch kann der Staubsaugeraufsatz einen biobasierten Kunststoff, wie beispielsweise auf Basis von Holz, Bambus, Ölsaaten und/oder anderen stärke- und zellulosereichen Pflanzen, aufweisen.

Ein "Ansaugrohr" ist insbesondere ein Rohr, welches der Auffangeinheit die Lebewesen und/oder Gegenstände und/oder dem Saugrohr eines Staubsaugers den Ansaugluftstrom mit Staub und anderen kleinen Schmutzteilchen zuführt. Bei einem Ansaugrohr kann es sich auch um einen Ansaugschlauch handeln. Das Ansaugrohr weist bevorzugt an einem Ende die Ansaugöffnung und am gegenüberliegenden Ende die Adaptereinheit zum Verbinden mit dem Saugrohr eines Staubsaugers auf.

Die "Ansaugöffnung" des Staubsaugeraufsatzes ist insbesondere eine Öffnung auf der Saugseite des Ansaugrohrs des Staubsaugeraufsatzes. Die Ansaugöffnung weist bevorzugt den Innendurchmesser des Ansaugrohres oder den Innendurchmesser der Auffangeinheit auf. Die Ansaugöffnung des Staubsaugeraufsatzes wird vom Benutzer gezielt über das zu entfernende Insekt, die zu entfernende Spinne, den zu entfernenden Gegenstände und/oder die zu reinigenden Flächen geführt.

Die "Ansaugrichtung" ist insbesondere die Richtung, in der die Luft von der Ansaugöffnung des Ansaugrohrs des Staubsaugeraufsatzes durch die Adaptereinheit und im Verbindungsfall weiter durch das Saugrohr in den Staubsauger angesaugt und somit zwangsbewegt wird.

Eine "Auffangeinheit" ist insbesondere ein Bauteil, welches zum Klassieren und zum Abtrennen und somit Aussieben von Lebewesen und/oder Gegenständen aus dem Ansaugluftstrom dient. Zum Abtrennen und somit dem Rückhalt von Lebewesen und/oder Gegenständen weist die Auffangeinheit insbesondere eine Fläche oder Teilfläche mit einem Durchbruch oder mehreren Durchbrüchen auf, durch welche der Ansaugluftstrom mit dem nicht zurückgehaltenen Staub und weiteren Schmutzteilen durchgeht. Die Auffangeinheit kann in ihrer einfachsten Ausführungsform als Siebboden oder auch als Siebkorb ausgebildet sein. Die Auffangeinheit weist insbesondere zumindest in dem Bereich, in dem die Insekten und/oder Gegenstände auf die Auffangeinheit auftreffen, das luftdurchlässige Aufprallschutzmaterial auf.

Bei einem "Durchbruch" handelt es sich insbesondere um ein Loch oder einen Schlitz in einer Fläche der Auffangeinheit. Der Durchbruch weist insbesondere einen minimalen Durchmesser oder eine minimale Abmessung auf, wodurch die Trenngröße der Auffangeinheit als Sieb, insbesondere für Staub- und/oder Schmutzteilchen und nicht für die bereits durch das Aufprallschutzmaterial zuvor ausgesiebten Insekten und/oder Gegenstände, festgelegt ist. Durch den Durchbruch oder die Durchbrüche der Auffangeinheit wird insbesondere beim Verbinden des Staubsaugeraufsatzes mit dem Saugrohr eines Staubsaugers beim Ansaugen der Ansaugluftstrom durchgesaugt und dadurch ein notwendiges Vakuum zum Ansaugen der Lebewesen und/oder Gegenstände an der Ansaugöffnung bereitgestellt.

Ein "Aufprallschutzmaterial" ist erfindungsgemäß ein dämpfendes, kompressibles und/oder elastisches Material. Das Aufprallschutzmaterial deckt insbesondere flächig einen Durchbruch oder mehrere Durchbrüche der Auffangeinheit auf der Seite der Auffangeinheit ausgerichtet zur Ansaugöffnung ab. Unter "luftdurchlässig" wird insbesondere verstanden, dass das Aufprallschutzmaterial porös ist und somit luftgefüllte Hohlräume aufweist. Die luftgefüllten Hohlräume des Aufprallschutzmaterials sind insbesondere durchgehend, sodass an der Ansaugöffnung des Staubsaugeraufsatzes angesaugte Luft durch das luftdurchlässige Aufprallschutzmaterial durchtritt und weiter durch das Ansaugrohr in Ansaugrichtung zum Staubsauger gefördert wird. Das Aufprallschutzmaterial kann fest oder lösbar vor dem Durchbruch oder den Durchbrüchen an der Auffangeinheit befestigt sein. Beispielsweise kann das Aufprallschutzmaterial stoffschlüssig an der Auffangeinheit verklebt sein. Auch kann das Aufprallschutzmaterial beispielsweise mittels eines Klettverschlusses formschlüssig und somit lösbar an der Auffangeinheit verbunden sein. Anstelle einer Verbindung an der Auffangeinheit selbst kann das Aufprallschutzmaterial jedoch auch im Inneren des Staubsaugeraufsatzes verbunden sein. Beispielsweise kann das Aufprallschutzmaterial kraftschlüssig mittels einer Klemmverbindung direkt innenliegend an der Ansaugöffnung des Ansaugrohres befestigt sein. Des Weiteren kann auch auf eine Verbindung des Aufprallschutzmaterials mit der Auffangeinheit und/oder dem Staubsaugeraufsatz verzichtet werden und das luftdurchlässige Aufprallschutzmaterial lediglich an der Auffangeinheit vor dem Durchbruch oder den Durchbrüchen in der Ansaugrichtung eingelegt sein. Aufgrund des Ansaugdruckes in der Ansaugrichtung wird das luftdurchlässige Aufprallschutzmaterial automatisch in Ansaugrichtung selbst angesaugt und somit vor dem Durchbruch oder den Durchbrüchen an der Auffangeinheit gehalten. Das Aufprallschutzmaterial kann mit seiner Unterseite in Ansaugrichtung direkt an dem Durchbruch oder den Durchbrüchen anliegen oder beabstandet durch ein Luftvolumen und/oder Trägermaterial, beispielsweise ein grobes Netzgitter, in Ansaugrichtung vor dem Durchbruch oder den Durchbrüchen angeordnet sein.

Das "Saugrohr" eines Staubsaugers ist insbesondere dasjenige Rohr, über welches die Ansaugluft, Staub und Schmutz in das Geräteinnere des Staubsaugers gelangt. Zwischen dem Saugrohr und dem Gehäuse des Staubsaugers kann ein Saugschlauch angeordnet sein. Ein Saugschlauch kann jedoch auch ein Saugrohr ersetzen, sodass der Saugschlauch des Staubsaugers direkt mit dem erfindungsgemäßen Staubsaugeraufsatz verbindbar ist.

Bei einem "Staubsauger" kann es sich um jeglichen handelsüblichen Staubsauger handeln. Ein Staubsauger ist insbesondere ein Reinigungsgerät, welches mit einem Gebläse ausgerüstet ist, wobei das Gebläse zum Ansaugen von Ansaugluft, Staub und/oder Schmutz einen Unterdruck erzeugt. Bei einem Staubsauger kann es sich beispielsweise um einen Beutelstaubsauger, Zyklonstaubsauger, Industriestaubsauger und/oder einen Staubsauger mit Wasserfilter handeln. Prinzipiell ist der Staubsaugeraufsatz auch für einen Tischsauger oder Laubsauger verwendbar.

In einer weiteren Ausführungsform des Staubsaugeraufsatzes weist das luftdurchlässige Aufprallschutzmaterial einen Schaumstoff und/oder ein Fasergebilde auf.

Somit kann das Hohlraumvolumen und die Dämpfungseigenschaft des Aufprallschutzmaterials gezielt über die Fertigung des Schaumstoffes und/oder des Fasergebildes eingestellt werden.

Unter "Schaumstoff" wird insbesondere ein künstlich hergestellter Stoff mit einer zelligen Struktur und niedriger Dichte verstanden. Schaumstoff ist insbesondere kompressibel, sodass durch Druck eine Volumenverkleinerung auftritt. Bei einem Schaumstoff handelt es sich insbesondere um einen offenzelligen Schaumstoff, bei dem die Zellwände nicht geschlossen sind, sodass ein durchgängiges Hohlraumsystem zum Durchtritt von Luft vorliegt. Schaumstoff weist insbesondere Kunststoff auf, beispielsweise Polypropylen, Polyethylen, Polystyrol, PET und/oder ein Biopolymer.

Ein "Fasergebilde" (auch "Vlies" genannt) ist insbesondere ein Gebilde aus Fasern begrenzter Länge, Endlosfasern und/oder geschnittenem Garn jeglicher Art, welche zu einer Faserschicht zusammengefügt und miteinander verbunden ist. Bei den Fasern kann es sich um natürliche und/oder künstliche Fasern handeln. Ein Fasergebilde ist insbesondere ein flexibles textiles Fasergebilde, welches leicht biegsam ist und bevorzugt eine geringe Dicke gegenüber seiner Länge und Breite aufweist. Anstelle oder ergänzend zu Textilfasern kann das Fasergebilde jedoch auch Papier-, Kunststoff- und/oder faserverstärkte Kunststofffasern aufweisen. Das Fasergebilde ist ebenfalls insbesondere luftdurchlässig.

Um einen geringen Luftwiderstand und einen geringen Druckverlust zu bewirken, weist das luftdurchlässige Aufprallschutzmaterial eine Porosität in einem Bereich von 10 % bis 99 %, insbesondere von 30 % bis 95 %, bevorzugt von 50 % bis 90 %, auf.

Durch eine optimale Porosität und somit Luftdurchlässigkeit können zum einen Staubteilchen und andere Schmutzteilchen durch das luftdurchlässige Aufprallschutzmaterial hindurch in Ansaugrichtung über das weitere Ansaugrohr und die Adaptereinheit des Staubsaugeraufsatzes in das Saugrohr des verbundenen Staubsaugers gelangen und dort abgetrennt werden. Zum anderen wird die Ansaugkraft des Staubsaugers durch das luftdurchlässige Aufprallschutzmaterial nicht oder nur gering beeinträchtigt. Zudem kann über die Porosität und somit das Hohlraumvolumen die Dämpfungseigenschaft und Kompressibilität des Aufprallschutzmaterials eingestellt werden.

Die "Porosität" ist insbesondere eine dimensionslose Messgröße, welche das Verhältnis von Hohlraumvolumen zu Gesamtvolumen des Aufprallschutzmaterials angibt. Bei der Porosität handelt es sich insbesondere auch um die Gesamtporosität, welche sich aus der Summe der offenen Porosität, welche die untereinander und mit der Umgebung in Verbindung stehenden Hohlräume umfasst, und der geschlossenen Porosität, bei der die Hohlräume nicht miteinander verbunden sind.

In einer weiteren Ausführungsform des Staubsaugeraufsatzes weist das luftdurchlässige Aufprallschutzmaterial eine Materialdicke von 1,0 mm bis 50,0 mm, insbesondere von 3,0 mm bis 30,0 mm, bevorzugt von 5,0 mm bis 20,0 mm, auf.

Die "Materialdicke" ist insbesondere die Abmessung des luftdurchlässigen Aufprallschutzmaterials in der Richtung quer zur größten Längsabmessung des Aufprallschutzmaterials und somit zu seiner Länge und Breite. Die Materialdicke des Aufprallschutzmaterials kann im Wesentlichen die Längsabmessung parallel zur Ansaugrichtung sein und/oder parallel zur Durchlassrichtung des Durchbruches oder der Durchbrüche.

Damit die Durchbrüche direkt in Ansaugrichtung durchströmbar sind, weist die Auffangeinheit eine Siebscheibe auf, wobei die Siebscheibe im Wesentlichen quer zu der Ansaugrichtung im Ansaugrohr angeordnet ist.

Bevorzugt nimmt die Siebscheibe mit ihrem Außendurchmesser den gesamten Innendurchmesser des Ansaugrohres ein. Die durch die Siebscheibe durchgehenden Durchbrüche können hierbei gleichmäßig oder ungleichmäßig über die gesamte Fläche der Siebscheibe verteilt oder nur in einem Teilbereich der Siebfläche angeordnet sein. Ist beispielsweise nur ein zentraler Bereich der Siebscheibe um die Längsmittelachse des Ansaugrohres mit den Durchbrüchen ausgebildet, so liegt in den nicht durchströmten äußeren Randbereichen ein strömungsberuhigter Bereich vor, in den das aufgesaugte Insekt oder die aufgesaugte Spinne krabbeln und sich dort erholen kann. In diesem Fall ist die gesamte Oberfläche der Siebscheibe, welche zur Ansaugöffnung ausgerichtet ist, mit dem luftdurchlässigen Aufprallschutzmaterial belegt und somit auch in den Bereichen der Siebscheibe, welche frei von Durchbrüchen sind.

Eine "Siebscheibe" ist insbesondere ein scheibenförmiger Filter, welcher nach dem Prinzip eines Siebes arbeitet. Die Siebscheibe weist durchgehend durch ihre Dicke insbesondere einen Durchbruch oder mehrere Durchbrüche auf. Bevorzugt ist die Siebscheibe nach der Ansaugöffnung mit einem Abstand zu dieser im Wesentlichen quer zu der Ansaugrichtung im Ansaugrohr angeordnet, um einen Auffangraum der Auffangeinheit auszubilden. Unter "im Wesentlichen quer" ist zu verstehen, dass die Längsabmessung der Siebscheibe und somit deren Durchmesser nicht zwingend in einem Winkel von 90° zur Ansaugrichtung und somit zur Längsmittelachse des Ansaugrohres ausgerichtet sein muss. Beispielsweise kann die Siebscheibe auch schräg innerhalb des Ansaugrohres eingebaut sein. Auch muss es sich bei der Siebscheibe nicht um eine flache Kreisscheibe handeln, sondern die Siebscheibe kann beispielsweise auch in Ansaugrichtung oder entgegen der Ansaugrichtung gewölbt sein.

In einer weiteren Ausführungsform des Staubsaugeraufsatzes weist die Auffangeinheit einen Siebkorb auf, wobei der Siebkorb eine Öffnung in einer Richtung zur Ansaugöffnung, ein sich an der Öffnung anschließendes Seitenelement und einen der Öffnung gegenüberliegenden Siebboden aufweist.

Durch die Ausgestaltung als Siebkorb können die Durchbrüche sowohl in das Seitenelement als auch in den Siebboden eingebracht sein. Des Weiteren kann der Siebbehälter selbst einstückig mit einem am Seitenelement fest verbundenen Siebboden oder mehrteilig ausgelegt sein. Beispielsweise kann ein Teil des Siebkorbs die Öffnung mit dem sich in Ansaugrichtung anschließenden Seitenelement aufweisen und auf einen nachfolgenden zweiten Teil mit dem Siebboden aufgeschraubt oder mit einer Rastverbindung verbunden sein. Durch eine Lösbarkeit des Siebkorbes innerhalb des Ansaugrohrs an der Ansaugöffnung und/oder eine Zerlegbarkeit des Siebkorbes zwischen dem Seitenelement in Ansaugrichtung und dem Siebboden, wird eine Entnahme und eine Reinigung des Siebkorbes erleichtert.

Bei einem "Siebkorb" handelt es sich insbesondere um ein korbförmiges Filterelement. Der Siebkorb weist insbesondere einen und/oder mehrere Durchbrüche in seinem Seitenelement und/oder Siebboden auf. Der Siebkorb weist insbesondere gegenüber seinem Siebboden eine Öffnung zum Einströmen der Ansaugluft in den Siebkorb und zum nachfolgenden Durchströmen der Durchbrüche des Siebkorbes auf. Bevorzugt ist der Siebkorb innenliegend vollständig mit dem luftdurchlässigen Aufprallschutzmaterial belegt.

Bei einem "Seitenelement" handelt es sich insbesondere um eine Seitenwand oder mehrere Seitenwände des Siebkorbs. Bevorzugt ist der Siebkorb mit Ausnahme des Siebbodens in der Ansaugrichtung rohrförmig ausgebildet, sodass dieser eine umlaufende Seitenwand aufweist. Selbstverständlich kann der Siebkorb in seiner geometrischen Grundform auch als langgestreckter Quader ausgebildet sein und sogar vier quadratische, rechteckige Seitenwände parallel zur Ansaugrichtung aufweisen. Ebenso kann der Siebkorb einen dreieckigen oder mehreckigen Querschnitt aufweisen. Bevorzugt weist der Siebkorb an der Ansaugöffnung des Ansaugrohrs einen runden Querschnitt auf. Beispielsweise kann der runde Siebkorb mit seinem Außendurchmesser um seine Öffnung innerhalb des Ansaugrohrs im Bereich der Ansaugöffnung eingesteckt, eingerastet oder fest verbunden sein.

Der "Siebboden" ist insbesondere ein Bauelement, welches den Siebkorb in Ansaugrichtung begrenzt. Bei einem Siebboden kann es sich auch um eine Siebscheibe und/oder eine Lochplatte handeln. Bevorzugt weist der Siebboden mehrere Durchbrüche auf. Der Siebboden kann jedoch auch als geschlossener Boden frei von Durchbrüchen ausgebildet sein. In diesem Fall durchströmt die Ansaugluft lediglich die Durchbrüche in dem Seitenelement des Siebkorbes.

Um den Siebkorb im Bereich seiner Öffnung optimal bündig in die Ansaugöffnung des Ansaugrohres zu integrieren und/oder zu verbinden, ist das Seitenelement des Siebkorbes radial umlaufend und/oder konisch zulaufend in Ansaugrichtung ausgebildet.

Somit weist der Siebkorb eine radial umlaufende Seitenwand und einen runden Querschnitt auf.

Für den Fall, dass der Siebkorb sich konisch in Ansaugrichtung auf den Siebboden hin verjüngt, vergrößert sich in Querrichtung zur Ansaugrichtung die durch die Durchbrüche in dem Seitenelement ausgebildete Siebfläche. Folglich wird ein Durchtritt des Ansaugluftstroms, welcher durch die Ansaugöffnung des Ansaugrohrs und die Öffnung des Siebkorbes direkt in die Auffangeinheit eintritt, durch die Durchbrüche in dem Seitenelement in Ansaugrichtung weiter verbessert. Der durch die Seitenwände austretende Ansaugstrom strömt somit vermehrt im äußeren Bereich des Hohlraums des Ansaugrohrs weiter in Ansaugrichtung außen auch um den Siebboden des Siebkorbs innerhalb des Ansaugrohrs herum in Richtung zur Adaptereinheit. Dadurch, dass der Siebkorb in Ansaugrichtung die Form eines Kegelstumpfs aufweist und somit der Siebboden einen geringeren Durchmesser als die Öffnung des Siebkorbes aufweist, kann der Siebkorb einfacher aus dem Ansaugrohr entnommen werden. Des Weiteren kann im Falle eines geschlossenen Siebbodens durch die konische Form der Auffangeinheit ein strömungsberuhigter Bereich oberhalb des geschlossenen oder auch nur mit wenigen Durchbrüchen ausgebildeten Siebbodens geschaffen und somit eine Verletzung von Lebewesen und/oder eine Zerstörung von Gegenständen zusätzlich zum Aufprallschutzmaterial weiter vermieden werden.

In einer weiteren Ausführungsform des Staubsaugeraufsatzes ist in der Ansaugrichtung vor dem Seitenelement und/oder dem Siebboden das Aufprallschutzmaterial angeordnet.

Somit kann lediglich das Seitenelement oder der Siebboden mit dem Aufprallschutzmaterial belegt sein oder der Siebkorb mit Seitenelement und Siebboden ist vollständig mit dem Aufprallschutzmaterial belegt. Es ist besonders vorteilhaft, wenn der Siebkorb innenliegend vollständig mit dem Aufprallschutzmaterial einstückig ausgekleidet ist, wobei das einstückige Aufprallschutzmaterial mit einer Form entsprechend der Form des Siebkorbes ausgebildet ist. Dadurch kann das einstückig ausgelegte Aufprallschutzmaterial einfach an der Öffnung des Siebkorbes entnommen und gereinigt oder ausgewechselt werden.

Um eine gleichmäßige Durchströmung zu gewährleisten, weist das Ansaugrohr einen konstanten Querschnitt auf.

Der konstante Querschnitt muss jedoch nicht über die gesamte Länge des Ansaugrohres ausgebildet sein. Beispielsweise kann das Ansaugrohr im Bereich zur Adaptereinheit einen konstanten Querschnitt aufweisen und sich in Richtung zur Ansaugöffnung konisch erweitern, um Insekten und/oder Kleinteile mit einer größeren Ansaugöffnung einfacher aufsaugen zu können. Dadurch liegt in der entgegengesetzten Ansaugrichtung eine konische Verengung des Ansaugrohres vor, wodurch die aufgesaugten Insekten und/oder Kleinteile gezielt zur Auffangeinheit geführt werden. Umgekehrt kann aber auch die Ansaugöffnung einen geringeren Querschnitt als das Ansaugrohr aufweisen. Selbstverständlich kann auch der gesamte Staubsaugeraufsatz mit dem Ansaugrohr und der Adaptereinheit über seine Länge eine sich konisch erweiternde und/oder verengende Form aufweisen.

In einer weiteren Ausführungsform des Staubsaugeraufsatzes ist die Adaptereinheit in Ansaugrichtung konisch zulaufend, sodass jeweils Saugrohre mit unterschiedlichen Innendurchmessern auf die Adaptereinheit aufsteckbar sind.

Dadurch, dass die Adaptereinheit sich in Ansaugrichtung konisch verengt, kann die Öffnung eines Saugrohrs eines konventionellen Staubsaugers direkt so weit entgegen der Ansaugrichtung auf die Adaptereinheit aufgeschoben werden, bis die Adaptereinheit und das Saugrohr reibschlüssig verbunden sind. Folglich kann auf separate zusätzliche Verbindungsteile und/oder Dichtungsmaterial verzichtet werden. Hierbei ist es besonders vorteilhaft, dass die konisch zulaufende Adaptereinheit in alle gängigen Innendurchmesser von Saugrohren einschiebbar ist. Prinzipiell kann sich die Adaptereinheit auch umgekehrt konisch in Ansaugrichtung erweitern, sodass in diesem Fall die Adaptereinheit von außen über das Saugrohr in Ansaugrichtung so weit gesteckt wird, bis die Adaptereinheit und das Saugrohr reibschlüssig verbunden sind.

Um auf eine Verbindung und/oder ein Dichtungsmaterial zu verzichten, sind das Ansaugrohr und die in Ansaugrichtung nachfolgende Adaptereinheit einstückig ausgebildet.

Bevorzugt geht das Ansaugrohr mit einem konstanten Durchmesser nahtlos in die Adaptereinheit mit einem in Ansaugrichtung konisch zulaufenden Durchmesser über.

Somit muss der Benutzer zum Ansaugen von Insekten, Spinnen und/oder Gegenständen lediglich den Staubsaugeraufsatz als ein einziges Teil handhaben und in ein konventionelles Saugrohr eines Staubsaugers einstecken. Folglich wird die Handhabbarkeit deutlich vereinfacht und ein Vakuumverlust aufgrund von Undichtigkeiten vermieden.

In einer weiteren Ausführungsform weist der Staubsaugeraufsatz einen auf- und zuklappbaren Deckel zum Öffnen und Verschließen der Ansaugöffnung auf.

Somit kann nach Aufsaugen und Auffangen eines Insektes innerhalb der Auffangeinheit sofort die Ansaugöffnung des Ansaugrohres des Staubsaugeraufsatzes und somit die Öffnung der Auffangeinheit verschlossen werden, Folglich wird ein Rauskrabbeln oder Fliegen des Insektes aus der Ansaugöffnung unterbunden. Vor allem für Allergiker und Insekten- und/oder Spinnenphobiker kann dadurch ein Kontakt oder eine Nähe zum Insekt oder zur Spinne ausgeschlossen werden.

Es ist besonders vorteilhaft, wenn der während der Benutzung des Staubsaugeraufsatzes aufgeklappte Deckel nach dem Ansaugen und Auffangen des Insektes in dem Auffangeinheit quasi automatisch ohne Handeingriff zuklappt. Dazu kann der Deckel beispielsweise mittels eines Federmechanismus außen am Ansaugrohr befestigt sein, sodass durch ein leichtes Berühren des Deckeläußeren beispielsweise mit dem Boden der Deckel automatisch zuklappt.

Um für Insektenphobiker und Allergiker, wie beispielsweise Bienengift-Allergiker, einen möglichst großen Abstand zum Deckel zu ermöglichen, weist der Deckel einen seitlichen Überstand über einem Außendurchmesser des Ansaugrohres auf, sodass zum Öffnen des Deckels gegen den Überstand mit einem langgestreckten Gegenstand drückbar ist.

Somit können auch Phobiker und/oder Allergiker ein eingefangenes Insekt wieder selbstständig und problemlos freilassen, ohne dabei zu nah an die Ansaugöffnung heran zu müssen. Nachdem der Benutzer den Staubsaugeraufsatz nach draußen gebracht oder beispielsweise außen auf der Fensterbank platziert hat, drückt der Benutzer einfach beispielsweise mit einem langen Stock parallel zum Ansaugrohr entgegen der Ansaugrichtung gegen den seitlichen Überstand des Deckels, wodurch der Deckel wieder aufklappt.

In einer weiteren Ausführungsform weist der Deckel Löcher zum Durchströmen des Ansaugluftstromes auf.

Damit kann auch nach Ansaugen und Aufnahme eines Insektes oder einer Spinne in die Auffangeinheit, das Ansaugen bei zugeklapptem Deckel fortgesetzt werden. Mittels der Löcher im Deckel wird bei fortgesetztem Ansaugbetrieb ein Vakuum im Staubsaugeraufsatz vermieden und sichergestellt, dass das aufgenommene Insekt oder die aufgenommene Spinne auf dem Aufprallschutzmaterial der Auffangeinheit verbleibt oder verbleiben. Folglich kann sichergestellt werden, dass durch den bei geschlossenem Deckel fortgesetzten Ansaugbetrieb das Insekt oder die Spinne sich nicht innerhalb der Auffangeinheit zum Deckel bewegt und beim Öffnen des Deckels sich sofort im Bereich der Ansaugöffnung befindet. Dadurch wird zum einen ein sicheres, verletzungsfreien Freilassen des Insektes oder der Spinne beim Öffnen des Deckels und Unterbrechung des Ansaugbetriebes gewährleistet, zum anderen können Phobiker nach Öffnen des Deckels zum Freilassen davon ausgehen, dass das Insekt oder die Spinne nicht sofort aus der Ansaugöffnung heraus kommt, sondern sich erst vom Boden zur Ansatzöffnung bewegen muss oder bei Ausschütteln des Staubsaugeraufsatzes erst herausfallen muss.

Zusätzlich kann der Staubsaugeraufsatz einen Regler zum Einstellen einer Ansaugstärke aufweisen. Dadurch kann die Ansaugstärke an die Art, Größe und/oder Verletzbarkeit des anzusaugenden Insektes und/oder Gegenstandes angepasst werden.

Bei einem "Regler" kann es sich beispielsweise um einen Schieberegler oder Drehregler zur Dosierung der Luftstromstärke handeln, wie diese häufig bei handelsüblichen Staubsaugern am Griff angebracht sind.

In einem zusätzlichen Aspekt der Erfindung wird die Aufgabe gelöst durch einen Staubsauger, welcher einen zuvor beschriebenen Staubsaugeraufsatz aufweist.

Im Weiteren wird die Erfindung anhand von Ausführungsbeispielen näher erläutert. Es zeigen
- Figur 1: eine stark schematische Schnittdarstellung eines Staubsaugeraufsatzes mit einem Siebboden und einer darüber angeordneten Schaumstoffeinlage in einem Zustand mit einem geöffneten Deckel, und
- Figur 2: eine stark schematische Schnittdarstellung einer Alternative des Staubsaugeraufsatzes mit einem Siebkorb und eingelegter Schaumstoffeinlage in einem Zustand mit einer mittels eines Deckels geschlossenen Ansaugöffnung.

Ein Staubsaugeraufsatz 101 weist ein Ansaugrohr 103 auf, welches an einer Saugseite eine Ansaugöffnung 105 aufweist. Das Saugrohr 103 weist einen konstanten Querschnitt in einer Ansaugrichtung 123 auf. An einem der Ansaugöffnung 105 gegenüberliegenden Ende geht das Ansaugrohr 103 nahtlos in einen Adapterkonus 121 über. Im Ansaugrohr 103 ist innenliegend beabstandet zur Ansaugöffnung 105 eine Auffangeinheit 107 angeordnet. Die Auffangeinheit 107 weist über den gesamten Innenquerschnitt des Ansaugrohres 103 ein Siebboden 113 mit mehreren Sieblöchern 117 auf. Oberhalb des Siebbodens 113 in Richtung zur Ansaugöffnung 105 ist eine luftdurchlässige Schaumstoffeinlage 119 der Auffangeinheit 107 angeordnet. Die luftdurchlässige Schaumstoffeinlage 119 weist eine Materialdicke von 10 mm auf.

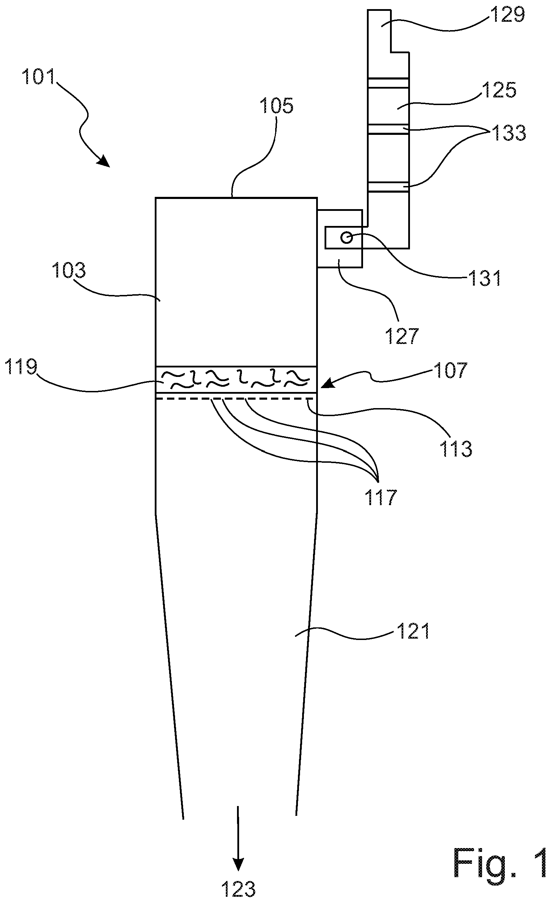

Der Staubsaugeraufsatz 101 weist außen am Ansaugrohr 103 eine Deckelhalterung 127 auf, welche über eine innenliegende Feder 131 mit einem Deckel 125 verbunden ist. Der Deckel 125 weist mehrere Löcher 133 auf. Gegenüberliegend zur Deckelhalterung 127 weist der Deckel 125 einen Deckelüberstand 129 auf. Die Figur 1 zeigt den Staubsaugeraufsatz 101 im Zustand mit offenem, aufgeklapptem Deckel 125, wodurch die Ansaugöffnung 105 offen liegt.

Der Staubsaugeraufsatz 101 wird von einem Spinnenphobiker zum Aufsaugen einer Spinne im Wohnzimmer verwendet. Dazu wird der Staubsaugeraufsatz 101 mit seinem Adapterkonus 121 in ein Saugrohr eines in Figur 1 nicht gezeigten Beutelstaubsaugers gesteckt. Der nicht gezeigte Beutelstaubsauger wird angeschaltet und über die offenliegende Ansaugöffnung 105 Ansaugluft in Ansaugrichtung 123 durch das Ansaugrohr 103, die luftdurchlässige Schaumstoffeinlage 119, die Sieblöcher 117 und den Adapterkonus 121 angesaugt. Der Spinnenphobiker führt nun die Ansaugöffnung 105 über die aufzusaugende Spinne, wobei der Spinnenphobiker durch den über den Adapterkonus 121 in das Saugrohr des Beutelstaubsaugers eingesteckten Staubsaugeraufsatz 101 einen maximalen räumlichen Abstand zur Ansaugöffnung 105 einhalten kann.

Die angesaugte Umgebungsluft wird durch die Poren der luftdurchlässigen Schaumstoffeinlage 119 und durch die nachfolgenden Sieblöcher 117 des Siebbodens 113 gezogen und nach Durchtritt durch die Sieblöcher 117 im Ansaugrohr 103 weiter in Ansaugrichtung 123 durch den Adapterkonus 121 gefördert. Die angesaugte Spinne weist eine Größe auf, welche deutlich größer als die Poren der luftdurchlässigen Schaumstoffeinlage 119 ist. Gefördert durch den Ansaugluftstrom in Ansaugrichtung 123 trifft die Spinne direkt auf die quer zur Ansaugrichtung 123 liegende luftdurchlässige Schaumstoffeinlage 119 auf. Durch die Elastizität und Kompressibilität der Schaumstoffeinlage 119 wird der Aufprall der Spinne gedämpft und diese verletzungsfrei durch die Schaumstoffeinlage 119 der Auffangeinheit 107 innerhalb des Ansaugrohrs 103 oberhalb des Siebbodens 113 zurückgehalten und somit ausgesiebt. Dagegen können kleinere Staub- und Schmutzteilchen in dem Ansaugluftstrom durch das Porensystem der luftdurchlässigen Schaumstoffeinlage 119 und den nachfolgenden Sieblöchern 117 durchtreten und werden über den unteren Teil des Ansaugrohrs 103 und den Adapterkonus 121 weiter zum nicht gezeigten Saugrohr des Beutelstaubsaugers gefördert.

Anschließend dreht der Spinnenphobiker den Staubsaugeraufsatz 101 derart, dass der aufgeklappte Deckel 125 außen gegen den Boden stößt, wodurch automatisch aufgrund der Feder 131 der Deckel 125 zuklappt und die verletzungsfrei auf der luftdurchlässigen Schaumstoffeinlage 119 zurückgehaltene Spinne innerhalb des Staubsaugeraufsatzes 101 gefangen ist.

Daraufhin bewegt der Spinnenphobiker den geschlossenen Staubsaugeraufsatz 101 mit dem verbundenen Saugrohr und dem Beutelstaubsauger zu einem geöffneten Fenster und hält den Staubsaugeraufsatz 101 nach draußen in die Umgebungsluft. Anschließend schaltete der Spinnenphobiker den Beutelstaubsauger aus, wodurch durch die Löcher 133 im Deckel 125 keine Umgebungsluft mehr in den Staubsaugeraufsatz 101 hinein angesaugt wird, und drückt mit der Spitze eines Besenstils von unten gegen den Deckelüberstand 129, wodurch der Deckel 125 aufklappt und die Ansaugöffnung 105 freigibt. Nun hält der Spinnenphobiker die Ansaugöffnung 105 des Staubsaugeraufsatzes 101 leicht nach unten, sodass die Spinne nach draußen in die Umgebung fällt.

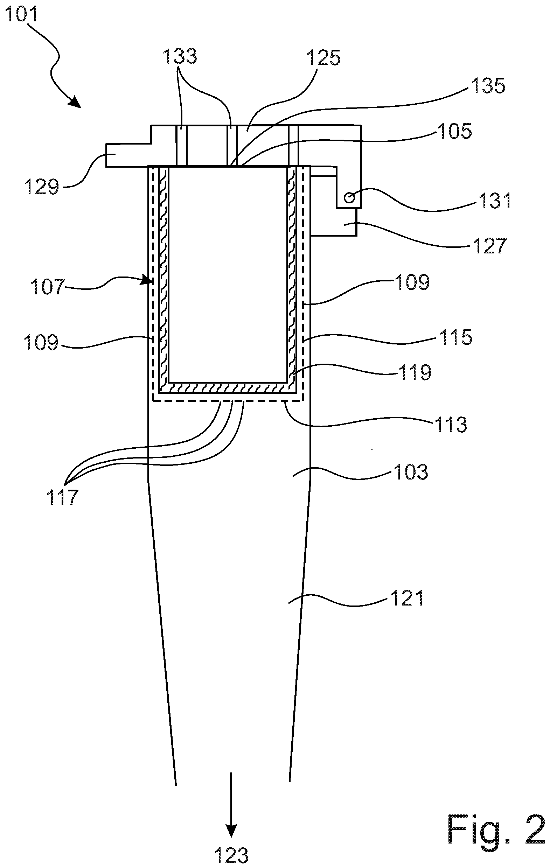

In einer Alternative des 101, welche in Figur 2 gezeigt ist, ist der Staubsaugeraufsatz 101 bezüglich des Deckels 125, des Ansaugrohrs 103 und des Adapterkonus 121 wie oben beschrieben ausgebildet und wird analog verwendet. Bei dieser Alternative des Staubsaugeraufsatzes 101 weist die Auffangeinheit 107 einen Siebkorb 115 mit einer oberen Öffnung 135, einer radial umlaufenden Seitenwand 109, einem Siebboden 113 und Sieblöchern 117 in der radial umlaufenden Seitenwand 109 und dem Siebboden 113 auf. Innenliegend zur Ansaugöffnung 105 und zur oberen Öffnung 135 ausgerichtet ist der Siebkorb 115 vollständig mit der luftdurchlässigen Schaumstoffeinlage 119 belegt, sodass die in Ansaugrichtung 123 nachfolgenden Sieblöcher 117 des Siebkorbes 115 von der luftdurchlässigen Schaumstoffeinlage 119 bedeckt sind.

In Figur 2 ist diese Alternative des Staubsaugeraufsatzes 101 mit geschlossenem Deckel 125 gezeigt. Dementsprechend wird zur Benutzung des Staubsaugeraufsatzes 101 der geschlossene Deckel 125 mit der Hand vom Benutzer aufgeklappt (und in Figur 2 somit nach rechts bewegt), wodurch die Ansaugöffnung 105 offen liegt. Anschließend wird der Staubsaugeraufsatz 105 wie oben beschrieben benutzt. Durch die Ausgestaltung der Auffangeinheit 107 als Siebkorb 115 mit der vollständigen Belegung mittels der luftdurchlässigen Schaumstoffeinlage 119 wird eine größere Rückhaltfläche für Insekten und Kleinteile bereitgestellt, zudem tritt die Ansaugluft hier nicht nur in Ansaugrichtung 123 durch die Sieblöcher 117 im Siebboden 113, sondern zusätzlich durch die seitlichen Sieblöcher 117 der Seitenwand 109. Dadurch wird sowohl die Aufnahmekapazität der Auffangeinheit 107 als auch die durchtretende Ansaugluftmenge erhöht.

Somit wird ein Staubsaugeraufsatz 101 bereitgestellt, mit welchem Insekten und Spinnentiere verletzungsfrei angesaugt und eingefangen werden können und anschließend auch von Phobikern mit einem ausreichenden Abstand zum Staubsaugeraufsatz 101 und seiner Ansaugöffnung 105 wieder gezielt freigelassen werden können.

### Bezugszeichenliste

- 101: Staubsaugeraufsatz
- 103: Ansaugrohr
- 105: Ansaugöffnung
- 107: Auffangeinheit
- 109: Seitenwand
- 113: Siebboden
- 115: Siebkorb
- 117: Sieblöcher
- 119: Schaumstoffeinlage
- 121: Adapterkonus
- 123: Ansaugrichtung
- 125: Deckel
- 127: Deckelhalterung
- 129: Deckelüberstand
- 131: Feder
- 133: Löcher
- 135: Öffnung

## Patentansprüche

1. Staubsaugeraufsatz (101) für ein Saugrohr eines Staubsaugers zum zerstörungsfreien Aussieben von Gegenständen und/oder von Lebewesen, wobei der Staubsaugeraufsatz (101) ein Ansaugrohr (103) mit einer Ansaugöffnung (105) an einem ersten Ende aufweist und in dem Ansaugrohr (103) in einer Ansaugrichtung (123) nachfolgend der Ansaugöffnung (105) eine Auffangeinheit (107) zum Aussieben angeordnet ist, wobei die Auffangeinheit (107) einen Durchbruch oder mehrere Durchbrüche (117) zum Durchströmen eines Ansaugluftstroms aufweist und der Staubsaugeraufsatz (101) an einem zweiten, dem ersten Ende gegenüberliegenden Ende eine Adaptereinheit (121) zum Verbinden mit dem Saugrohr des Staubsaugers aufweist, **dadurch gekennzeichnet, dass** die Auffangeinheit (107) ein luftdurchlässiges Aufprallschutzmaterial (119) in der Ansaugrichtung vor dem Durchbruch oder den Durchbrüchen (117) aufweist, wobei das luftdurchlässige Aufprallschutzmaterial (119) ein dämpfendes, kompressibles und/oder elastisches Material ist.

2. Staubsaugeraufsatz (101) nach Anspruch 1, **dadurch gekennzeichnet, dass** das luftdurchlässige Aufprallschutzmaterial (119) einen Schaumstoff und/oder ein Fasergebilde aufweist.

3. Staubsaugeraufsatz (101) nach Anspruch 1 oder 2, **dadurch gekennzeichnet, dass** das luftdurchlässige Aufprallschutzmaterial (119) eine Porosität in einem Bereich von 10 % bis 99 %, insbesondere von 30 % bis 95 %, bevorzugt von 50 % bis 90 %, auf.

4. Staubsaugeraufsatz (101) nach einem der vorherigen Ansprüche, **dadurch gekennzeichnet, dass** das luftdurchlässige Aufprallschutzmaterial (119) eine Materialdicke von 1,0 mm bis 50,0 mm, insbesondere von 3,0 mm bis 30,0 mm, bevorzugt von 5,0 mm bis 20,0 mm, aufweist.

5. Staubsaugeraufsatz (101) nach einem der vorherigen Ansprüche, **dadurch gekennzeichnet, dass** die Auffangeinheit (107) eine Siebscheibe (113) aufweist, wobei die Siebscheibe (113) im Wesentlichen quer zu der Ansaugrichtung (123) im Ansaugrohr (103) angeordnet ist.

6. Staubsaugeraufsatz (101) nach einem der vorherigen Ansprüche, **dadurch gekennzeichnet, dass** die Auffangeinheit (107) einen Siebkorb (115) aufweist, wobei der Siebkorb (115) eine Öffnung (135) in einer Richtung zur Ansaugöffnung (105), ein sich an der Öffnung (135) anschließendes Seitenelement (109) und einen der Öffnung (135) gegenüberliegenden Siebboden (113) aufweist.

7. Staubsaugeraufsatz (101) nach einem der vorherigen Ansprüche, **dadurch gekennzeichnet, dass** das Seitenelement (109) des Siebkorbs (115) radial umlaufend und/oder konisch zulaufend in Ansaugrichtung (123) ausgebildet ist.

8. Staubsaugeraufsatz (101) nach einem der Ansprüche 6 oder 7, **dadurch gekennzeichnet, dass** in der Ansaugrichtung (123) vor dem Seitenelement (109) und/oder dem Siebboden (113) das Aufprallschutzmaterial (119) angeordnet ist.

9. Staubsaugeraufsatz (101) nach einem der vorherigen Ansprüche, **dadurch gekennzeichnet, dass** das Ansaugrohr (103) einen konstanten Querschnitt aufweist.

10. Staubsaugeraufsatz (101) nach einem der vorherigen Ansprüche, **dadurch gekennzeichnet, dass** die Adaptereinheit (121) in Ansaugrichtung (123) konisch zulaufend ist, sodass jeweils Saugrohre mit unterschiedlichen Innendurchmessern auf die Adaptereinheit (121) aufsteckbar sind.

11. Staubsaugeraufsatz (101) nach einem der vorherigen Ansprüche, **dadurch gekennzeichnet, dass** das Ansaugrohr (103) und die in Ansaugrichtung (123) nachfolgende Adaptereinheit (121) einstückig ausgebildet sind.

12. Staubsaugeraufsatz (101) nach einem der vorherigen Ansprüche, **dadurch gekennzeichnet, dass** der Staubsaugeraufsatz (101) einen auf- und zuklappbaren Deckel (125) zum Öffnen und Verschließen der Ansaugöffnung (105) aufweist.

13. Staubsaugeraufsatz (101) nach Anspruch 12, **dadurch gekennzeichnet, dass** der Deckel (125) einen seitlichen Überstand (129) über einen Außendurchmesser des Ansaugrohres (103) aufweist, sodass zum Öffnen des Deckels (125) gegen den Überstand (129) mit einem langgestreckten Gegenstand drückbar ist.

14. Staubsaugeraufsatz (101) nach Anspruch 12 oder 13, **dadurch gekennzeichnet, dass** der Deckel (125) Löcher (133) zum Durchströmen des Ansaugluftstroms aufweist.

## Claims

1. Vacuum-cleaner attachment (101) for a vacuum tube of a vacuum cleaner for non-destructively screening out objects and/or living beings, wherein the vacuum-cleaner attachment (101) comprises a suction tube (103) comprising a suction opening (105) at a first end, and a collection unit (107) for the screening out is arranged in the suction tube (103) downstream of the suction opening (105) in a suction direction (123), wherein the collection unit (107) comprises at least one hole or a plurality of holes (117) for a flow of suction air to flow through, and the vacuum-cleaner attachment (101) comprises an adapter unit (121) at a second end opposite the first end for connecting to the vacuum tube of the vacuum cleaner, **characterised in that** the collection unit (107) comprises an air-permeable impact protection material (119) upstream of the hole or holes (117) in the suction direction, wherein the air-permeable impact protection material (119) is a damping, compressible and/or resilient material.

2. Vacuum-cleaner attachment (101) according to claim 1, **characterised in that** the air-permeable impact protection material (119) comprises a foam and/or a fibre structure.

3. Vacuum-cleaner attachment (101) according to claim 1 or 2, **characterised in that** the air-permeable impact protection material (119) has a porosity in a range of 10% to 99%, in particular of 30% to 95%, preferably of 50 to 90%.

4. Vacuum-cleaner attachment (101) according to any of the preceding claims, **characterised in that** the air-permeable impact protection material (119) has a material thickness of 1.0 mm to 50.0 mm, in particular of 3.0 mm to 30.0 mm, preferably of 5.0 mm to 20.0 mm.

5. Vacuum-cleaner attachment (101) according to any of the preceding claims, **characterised in that** the collection unit (107) comprises a screen disc (113), wherein the screen disc (113) is arranged substantially transversely to the suction direction (123) in the suction tube (103).

6. Vacuum-cleaner attachment (101) according to any of the preceding claims, **characterised in that** the collection unit (107) comprises a screen basket (115), wherein the screen basket (115) comprises an opening (135) in a direction towards the suction opening (105), a side element (109) which adjoins the opening (135), and a screen base (113) which is arranged opposite the opening (135).

7. Vacuum-cleaner attachment (101) according to any of the preceding claims, **characterised in that** the side element (109) of the screen basket (115) is formed to be radially circumferential and/or conically tapered in the suction direction (123).

8. Vacuum-cleaner attachment (101) according to any of claims 6 or 7, **characterised in that** the impact protection material (119) is arranged upstream of the side element (109) and/or the screen base (113) in the suction direction (123).

9. Vacuum-cleaner attachment (101) according to any of the preceding claims, **characterised in that** the suction tube (103) has a constant cross section.

10. Vacuum-cleaner attachment (101) according to any of the preceding claims, **characterised in that** the adapter unit (121) is conically tapered in the suction direction (123), such that suction tubes having different internal diameters can be fitted to the adapter unit (121).

11. Vacuum-cleaner attachment (101) according to any of the preceding claims, **characterised in that** the suction tube (103) and the adapter unit (121) following in the suction direction (123) are formed in one piece.

12. Vacuum-cleaner attachment (101) according to any of the preceding claims, **characterised in that** the vacuum-cleaner attachment (101) comprises a lid (125), which can be flipped open and closed so as to open and close the suction opening (105).

13. Vacuum-cleaner attachment (101) according to claim 12, **characterised in that** the lid (125) comprises a lateral projection (129) beyond an external diameter of the suction tube (103), such that an elongate object can be pressed against the projection (129) to open the lid (125).

14. Vacuum-cleaner attachment (101) according to claim 12 or 13, **characterised in that** the lid (125) comprises holes (133) for the flow of suction air to flow through.

## Revendications

1. Accessoire pour aspirateur (101) pour un tube d'aspiration d'un aspirateur pour séparer par criblage de manière non destructive des objets et/ou des êtres vivants, l'accessoire pour aspirateur (101) présentant un tube d'aspiration (103) avec une ouverture d'aspiration (105) à une première extrémité et une unité de collecte (107) pour la séparation par criblage étant agencée dans le tube d'aspiration (103) en aval de l'ouverture d'aspiration (105) dans une direction d'aspiration (123), l'unité de collecte (107) présentant une ouverture ou plusieurs ouvertures (117) pour le passage d'un flux d'air d'aspiration et l'accessoire pour aspirateur (101) présentant à une deuxième extrémité opposée à la première extrémité une unité d'adaptation (121) destinée à être reliée au tube d'aspiration de l'aspirateur, **caractérisé en ce que** l'unité de collecte (107) présente un matériau de protection contre les impacts perméable à l'air (119) en amont de l'ouverture ou des ouvertures (117) dans la direction d'aspiration, le matériau de protection contre les impacts perméable à l'air (119) étant un matériau amortissant, compressible et/ou élastique.

2. Accessoire pour aspirateur (101) selon la revendication 1, **caractérisé en ce que** le matériau de protection contre les impacts perméable à l'air (119) présente une mousse et/ou une structure fibreuse.

3. Accessoire pour aspirateur (101) selon la revendication 1 ou 2, **caractérisé en ce que** le matériau de protection contre les impacts perméable à l'air (119) présente une porosité dans une plage de 10 % à 99 %, notamment de 30 % à 95 %, de préférence de 50 % à 90 %.

4. Accessoire pour aspirateur (101) selon l'une quelconque des revendications précédentes, **caractérisé en ce que** le matériau de protection contre les impacts perméable à l'air (119) présente une épaisseur de matériau de 1,0 mm à 50,0 mm, notamment de 3,0 mm à 30,0 mm, de préférence de 5,0 mm à 20,0 mm.

5. Accessoire pour aspirateur (101) selon l'une quelconque des revendications précédentes, **caractérisé en ce que** l'unité de collecte (107) présente un disque de criblage (113), le disque de criblage (113) étant agencé dans le tube d'aspiration (103) essentiellement transversalement à la direction d'aspiration (123).

6. Accessoire pour aspirateur (101) selon l'une quelconque des revendications précédentes, **caractérisé en ce que** l'unité de collecte (107) présente un panier de criblage (115), le panier de criblage (115) présentant une ouverture (135) dans une direction vers l'ouverture d'aspiration (105), un élément latéral (109) se raccordant à l'ouverture (135) et un fond de criblage (113) opposé à l'ouverture (135).

7. Accessoire pour aspirateur (101) selon l'une quelconque des revendications précédentes, **caractérisé en ce que** l'élément latéral (109) du panier de criblage (115) est réalisé sous forme périphérique radialement et/ou effilée coniquement dans la direction d'aspiration (123).

8. Accessoire pour aspirateur (101) selon l'une quelconque des revendications 6 ou 7, **caractérisé en ce que**, dans la direction d'aspiration (123), le matériau de protection contre les impacts (119) est agencé devant l'élément latéral (109) et/ou le fond de criblage (113).

9. Accessoire pour aspirateur (101) selon l'une quelconque des revendications précédentes, **caractérisé en ce que** le tube d'aspiration (103) présente une section constante.

10. Accessoire pour aspirateur (101) selon l'une quelconque des revendications précédentes, **caractérisé en ce que** l'unité d'adaptation (121) est effilée coniquement dans la direction d'aspiration (123), de telle sorte que des tubes d'aspiration de différents diamètres intérieurs peuvent être emboîtés sur l'unité d'adaptation (121).

11. Accessoire pour aspirateur (101) selon l'une quelconque des revendications précédentes, **caractérisé en ce que** le tube d'aspiration (103) et l'unité d'adaptation (121) qui le suit dans la direction d'aspiration (123) sont réalisés d'une seule pièce.

12. Accessoire pour aspirateur (101) selon l'une quelconque des revendications précédentes, **caractérisé en ce que** l'accessoire pour aspirateur (101) présente un couvercle (125) pouvant être relevé et rabattu pour ouvrir et fermer l'ouverture d'aspiration (105).

13. Accessoire pour aspirateur (101) selon la revendication 12, **caractérisé en ce que** le couvercle (125) présente une saillie latérale (129) sur un diamètre extérieur du tube d'aspiration (103), de telle sorte que pour ouvrir le couvercle (125), on peut appuyer contre la saillie (129) avec un objet allongé.

14. Accessoire pour aspirateur (101) selon la revendication 12 ou 13, **caractérisé en ce que** le couvercle (125) présente des trous (133) pour le passage du flux d'air d'aspiration.
